# EUROPEAN PATENT SPECIFICATION

(11) **EP 4 623 706 B1**
(45) Date of publication and mention of the grant of the patent: **15.04.2026**
(21) Application number: 24167517.2
(22) Date of filing: 28.03.2024
(51) Int. Cl.: A23N 4/20, A23N 7/00, B26D 3/26

(54) **MACHINE AND METHOD FOR AUTOMATICALLY PREPARING A WHOLE PINEAPPLE FOR CONSUMPTION AT A PINEAPPLE POINT OF SALE**
MASCHINE UND VERFAHREN ZUR AUTOMATISCHEN VORBEREITUNG EINER GANZEN ANANAS ZUM VERZEHR AN EINEM ANANAS-VERKAUFSORT
MACHINE ET MÉTHODE DE PRÉPARATION AUTOMATIQUE D'UN ANANAS ENTIER POUR LA CONSOMMATION À UN POINT DE VENTE D'ANANAS

(43) Date of publication of application: 01.10.2025
(73) Proprietor: SanLucar Fruit S.L.U., 46530 Puzol Valencia (ES)
(72) Inventor: Alvarez Ferrando, Carlos, 46021 Valencia (ES)
(74) Representative: Bernsmann, Falk

(56) References cited:
- WO-A1-2019/209849
- WO-A2-2012/106064
- DE-U1- 202014 007 423
- US-A- 2 178 884
- US-A- 2 187 326
- US-A- 3 557 851

## Description

### Technical Field

The present invention relates to a machine for automatically preparing a whole pineapple for consumption at a pineapple point of sale, the machine comprising a number of processing stations for removing a top end of the pineapple, a bottom end of the pineapple, a peel of the pineapple and/or a core of the pineapple; a cutting station for cutting the pineapple into a plurality of pineapple pieces; a loading device for loading the pieces into at least one recipient having at least two compartments separated by at least one partition wall; at least one horizontal shutter, the horizontal shutter being movable between a closed position holding the pineapple pieces above the recipient and an open position letting the pineapple pieces fall into the recipient. The invention further relates to a method for automatically preparing a whole pineapple for consumption at a pineapple point of sale using the machine.

### Background Art

Machines for automatically preparing a whole pineapple for consumption at a pineapple point of sale are known from the publications NL 2012779 B1 and EP 3 623 122 A1. In these machines, the pineapple pieces prepared from the pineapple are released from the machines into a single recipient by opening a horizontal shutter arranged above the recipient. If the pineapple pieces are not eaten at the same time, the pieces left in the recipient risk spoiling and being wasted.

To overcome this problem, the publications US 2011/0047938 A1 and US 2021/0309446 A1 propose machines for extruding multiple segments from a whole pineapple into separate packaging units. The packaging units can be opened individually for eating a single segment of the pineapple. The main disadvantage of these machines is that only a small fraction of the pineapple pulp can be extruded into the packaging units. Furthermore, the machines are designed for industrial mass processing of pineapples and not for preparation of an individual pineapple at a point of sale.

The publication US 2 178 884 A discloses a filling machine for cutting annular pineapple slices into pieces and filling these together with other fruits into one or more recipients. The filling machine does not comprise any means for preparing the annular pineapple slices from a whole pineapple and is not suitable for use by untrained customers at a pineapple point of sale.

Further machines for automatically processing pineapples are known from any of DE 20 2014 007423 U1 and WO 2019/209849 A1.

### Technical Problem

The present invention solves the problem of providing a machine and a method for automatically preparing a whole pineapple for consumption, wherein the prepared pineapple can be eaten in more than one serving, and the machine and the method can be used by untrained customers at a pineapple point of sale.

### Solution to Problem

The problem is solved by a machine according to claim 1 and by a method according to claim 12. Advantageous embodiments are subject of the dependent claims.

The machine is designed for automatically preparing a whole pineapple for consumption at a pineapple point of sale, preferably as a self-service machine to be used by untrained customers. According to the invention, the term "pineapple" is used for a pineapple fruit. According to the invention, a whole pineapple comprises the core of the pineapple, the pulp of the pineapple surrounding the core, the peel of the pineapple surrounding the pulp, and the leaves of the pineapple attached to a top end of the pineapple. A longitudinal axis of the pineapple is defined coaxial to the core of the pineapple. A bottom end of the pineapple, where the pineapple fruit was attached to a pineapple plant, lies opposite to the top end along the longitudinal axis.

According to the invention, the process of preparing a whole pineapple for consumption includes the steps of removing the top end of the pineapple, removing the bottom end of the pineapple, removing the peel of the pineapple, removing the core of the pineapple, cutting the pulp of the pineapple perpendicularly to the longitudinal axis of the pineapple into slices, and/or cutting the pulp of the pineapple along the longitudinal axis of the pineapple into segments.

The machine comprises a number of processing stations for removing a top end of the pineapple, a bottom end of the pineapple, a peel of the pineapple and/or a core of the pineapple.

The machine comprises a cutting station for cutting the pineapple into a plurality of pineapple pieces. Preferably, the cutting station is designed for cutting the pineapple into a plurality of slices orthogonally to the longitudinal axis of the pineapple and/or into a plurality of segments along the longitudinal axis, preferably after removal of the core and/or the peel of the pineapple by a second processing station.

The cutting station preferably comprises a plurality of, preferably four, five, six or seven, slicing knives having parallel cutting directions and parallel cutting planes. The slicing knives are preferably arranged at equal distances from one another, for example at a distance of 15 mm to 25 mm, preferably 20 mm, from one another. Preferably, the cutting directions and cutting planes of the slicing knives are oriented horizontally. Preferably, the slicing knives are stationary with respect to the surrounding of the machine, and the machine comprises a pusher for pushing the pineapple, preferably in a horizontal direction, through spaces between the stationary slicing knives. The pusher preferably comprises a number of fingers corresponding to the number of spaces between the slicing knives wherein each finger is arranged for pushing one slice of the pineapple through a space between two adjacent slicing knives further into the cutting station.

The machine comprises a loading device for loading the pineapple pieces into at least one recipient having at least two compartments separated by at least one partition wall. According to the invention, the at least two compartments can be part of one single recipient, or the at least two compartments may be formed by at least two separate recipients. If the at least two compartments are part of one single recipient, the recipient preferably is designed for separating the compartments from one another after loading the pineapple pieces into the compartments. The at least one recipient preferably comprises a number of sealing means, for instance a number of lids, for individually sealing the at least two compartments. By loading the pineapple pieces into separate compartments, the pineapple pieces from one compartment can be eaten without spoiling the pineapple pieces in the other compartment or compartments. Therefore, the pineapple pieces can be eaten conveniently in more than one serving and/or the compartments can be separated from one another for conveniently sharing the pineapple pieces.

The loading device preferably comprises a loading bay for receiving the at least one recipient. Preferably, the loading bay is removable to exchange the loading bay configured for receiving the at least one recipient having at least two compartments for a conventional loading bay configured for receiving a conventional single-compartment recipient. Preferably, the at least one deflector element - possibly except a section of the deflector element extending between the horizontal shutters - is fixed to the loading bay so that the deflector element can be easily removed with the loading bay. This way the machine can be transformed easily into a machine for conventional single-compartment recipients making the machine more versatile.

The machine preferably comprises at least one horizontal shutter, the at least one horizontal shutter being movable, preferably rotatable, between a closed position holding the pineapple pieces above the recipient and an open position letting the pineapple pieces fall into the recipient. The at least one horizontal shutter can maintain the pineapple on the surface of the closed shutter while it is processed in the cutting station. Once the processing is completed, the shutter can be opened to release the processed pineapple pieces into the recipient placed below the shutter. The machine preferably comprises a sensor, for instance an optical sensor, for automatic verification whether the at least one recipient is properly placed under the at least one horizontal shutter before opening the shutter.

The at least one horizontal shutter is operated, for instance, by a pusher pushing the pineapple onto the shutter. For example, the machine comprises a spring element, for instance a coil spring, biasing the at least one horizontal shutter into the open position. Preferably, the pusher comprises an actuator moving the at least one horizontal shutter against a recoil force of the spring element into the closed position, when the pusher pushes the pineapple onto the shutter. When the pineapple shall be released, the pusher can be retreated thereby releasing the at least one horizontal shutter so that the recoil force of the spring element returns the shutter to the open position.

The machine preferably comprises at least one deflector element for deflecting the falling pineapple pieces from an upper edge of the at least one partition wall of the at least one recipient. If a recipient having at least two separate compartments was placed in a conventional pineapple preparation machine, pineapple pieces falling onto the partition wall between the compartments could pile up and/or fall beside the recipient. This problem is solved by the at least one deflector element of the machine according to the invention. For example, the at least one deflector element has the shape of a gable roof wherein a ridge of the gable roof is arranged in parallel above the partition wall.

### Description of Embodiments

The machine preferably comprises a first processing station having a top knife for removing the top end of the pineapple and a bottom knife for removing the bottom end of the pineapple, wherein the top knife and the bottom knife have parallel cutting directions and parallel cutting planes, and the top knife is arranged at a distance measured perpendicularly to the cutting planes from the bottom knife. According to the invention, the cutting plane of a knife is the plane spanned by the cutting edge and the cutting direction of the knife.

For example, the top knife and the bottom knife are arranged to cut the ends of the pineapple with horizontal cutting edges in a horizontal cutting direction, and the top knife is arranged at the distance vertically above the bottom knife. For example, the top knife and the bottom knife are stationary with respect to a surrounding of the machine, and the machine comprises a pusher for pushing the pineapple through the first processing station, thereby removing the ends of the pineapple with the stationary top knife and bottom knife. For example, the pusher is arranged for pushing the pineapple in an upright orientation with the longitudinal axis of the pineapple oriented vertically, wherein the pushing direction is horizontal.

The machine preferably comprises a second processing station for removing the core and/or the peel of the pineapple after removal of the top end and the bottom end of the pineapple by the first processing station. For example, the longitudinal axis of the pineapple is oriented vertically during the removal of the core and of the peel. The second processing station preferably comprises two circular blades arranged concentrically for simultaneously separating the core and the peel from the pulp of the pineapple. For example, the second processing station comprises a axial pusher for pushing the pineapple along its longitudinal axis through a space between the circular blades while the circular blades are stationary with respect to the surrounding of the machine.

The second processing station preferably comprises a mobile support element supporting the pineapple while the pineapple is driven through the space between the circular blades. Preferably, the mobile support element is attached to the axial pusher at a fixed distance from the axial pusher so that the pineapple without its top end and bottom end can be placed between the axial pusher and the mobile support element. The mobile support element preferably has recesses for the circular blades. Consequently, the circular blades can be concealed in the recesses so that the circular blades do not hinder the placement of the pineapple on the mobile support element, for instance by pushing the pineapple in a horizontal direction onto the mobile support element.

In another example, the second processing station comprises a blade drive for driving the circular blades through the pineapple along its longitudinal axis while the pineapple is stationary with respect to the surrounding of the machine. For instance, the pineapple is supported by a support surface while the circular blades are driven through the pineapple.

The at least one horizontal shutter preferably comprises at least two horizontal shutters, the at least two horizontal shutters cooperating in the closed position for holding the pineapple pieces above the recipient. The opening movement of one single horizontal shutter can lead to an uneven amount of pineapple pieces falling into the compartments of the at least one recipient. This problem can be avoided by at least two shutters moving, preferably rotating, to the open position in different directions.

For example, the at least two horizontal shutters are connected to one another for synchronized movement, preferably via a gear train.

Preferably, the at least two horizontal shutters are movable, preferably rotatable, in opposing directions from the closed position to the open position to allow for an equal distribution of the pineapple pieces into the compartments of the at least one recipient.

Preferably, the at least two horizontal shutters are movable, preferably rotatable, in directions perpendicular to the at least one partition wall of the at least one recipient from the closed position to the open position. In this way, the opening movement of the shutters draws the pineapple pieces away from the partition wall reducing the probability of the pineapple pieces falling onto the partition wall or onto the at least one deflector element arranged above the partition wall.

Preferably, the at least one deflector element - preferably including a section of the deflector element extending between the at least two horizontal shutters in the closed position - is removable from the machine. When the deflector element is removed, the machine can be used to prepare pineapple slices from the pineapple in a conventional single-compartment recipient. If the deflector element was in place when preparing pineapple slices, the deflector element would prevent the pineapple slices from falling into the recipient. Therefore, the removable deflector element increases the versatility of the machine.

The at least one deflector element preferably comprises a section extending between the at least two horizontal shutters in the closed position. Extending the at least one deflector element between the shutters prevents pineapple pieces from falling onto the deflector element and/or piling up on the deflector element. The section may be detached or detachable from the remaining part of the deflector element for easy removal of the deflector element from the machine.

Preferably, the at least one deflector element is rotatable about a horizontal axis. By rotating the at least one deflector element, pineapple pieces that have fallen onto the deflector element can be removed. Preferably, the at least one deflector element has a prismatic shape, for instance a triangular prismatic shape, wherein the longitudinal axis of the deflector element is arranged horizontally, preferably in parallel above the partition wall of the recipient, and the deflector element is rotatable about its longitudinal axis.

Preferably, the at least one deflector element is rotatable by a weight of pineapple pieces falling onto the deflector element. For instance, the at least one deflector element is rotatably supported by low-friction bearings so that pineapple pieces falling off-centre onto the deflector element can put the deflector element in rotation.

For example, the at least one horizontal shutter is connected to the at least one deflector element for rotating the deflector element when the shutter moves between the closed position and the open position. For instance, a pusher for pushing the pineapple onto the at least on horizontal shutter comprises an actuator for rotating the at least one deflector element when the pusher pushes the pineapple onto the shutter and/or when the pusher retreats after having pushed the pineapple onto the shutter.

The machine preferably comprises a motor for rotating the at least one deflector element about the horizontal axis.

The machine preferably comprises a sweeping device for automatically sweeping pineapple pieces from the at least one deflector element. The machine preferably comprises a motor for driving the sweeping element. For example, the at least one horizontal shutter is connected to the sweeping device for driving the sweeping device when the shutter moves between the closed position and the open position. For instance, a pusher for pushing the pineapple onto the at least on horizontal shutter comprises an actuator for driving the sweeping device when the pusher pushes the pineapple onto the shutter and/or when the pusher retreats after having pushed the pineapple onto the shutter.

The cutting station preferably comprises a segmenting knife for cutting the pineapple along a vertical axis into pineapple segments, while the pineapple is placed on the at least one horizontal shutter; wherein the machine comprises a knife drive for driving the segmenting knife along the vertical axis into the pineapple. Preferably, the pineapple is oriented with its longitudinal axis on the vertical axis while the segmenting knife cuts the pineapple into pineapple segments. The advantage of the segmenting knife acting on the pineapple positioned on the at least one shutter is that the segmenting knife can be held in a position inserted into the pineapple when the shutter is opened. In this way, the segmenting knife can prevent the pineapple segments from following the opening movement of the shutter which could lead to an uneven filling of the compartments of the at least one recipient with the pineapple pieces.

For instance, the at least one horizontal shutter comprises at least one recess for partially receiving the segmenting knife. In this way, damage by the segmenting knife hitting the shutter can be avoided.

The segmenting knife preferably comprises a shaft arranged on the vertical axis and plurality of flat blades arranged radially on the shaft, wherein the flat blades comprise a number of holes and/or have an upwardly tapering shape. Designing the flat blades with holes and/or an upwardly tapering, for instance triangular, shape reduces the area of a contact surface between the segmenting knife and the pineapple. Therefore, the risk of the pineapple pieces sticking to the segmenting knife is reduced, in particular if the segmenting knife is held in a position inserted into the pineapple when the at least one horizontal shutter is opened for releasing the pineapple pieces to the at least one recipient.

The machine preferably comprises an orientation element for setting an orientation of the at least one recipient during placement of the at least one recipient below the at least one horizontal shutter. The orientation element prevents a user from placing the at least one recipient in a wrong orientation that might lead to an uneven filling of the compartments of the recipient. The orientation element comprises, for example, a web and/or a groove cooperating with a corresponding groove and/or web of the at least one recipient when the recipient is placed below the at least one horizontal shutter.

The method according to the invention is designed for automatically preparing a whole pineapple for consumption at a pineapple point of sale, preferably using a machine according to the invention. Definitions, features, and benefits described in the context of the machine apply *mutatis mutandis* to the method.

The method comprises the step of removing a top end of the pineapple, a bottom end of the pineapple, a peel of the pineapple and/or a core of the pineapple using the processing stations of the machine.

The method comprises the step of cutting the pineapple into a plurality of pineapple pieces using the cutting station of the machine.

The method comprises the step of loading the pieces into at least one recipient having at least two compartments separated by at least one partition wall using the loading device of the machine, wherein the step of loading the pineapple pieces into the at least one recipient comprises moving the at least one horizontal shutter of the machine from a closed position holding the pineapple pieces above the recipient to an open position letting the pineapple pieces fall into the recipient and deflecting the falling pineapple pieces from an upper edge of the at least one partition wall of the at least one recipient using the at least one deflector element of the machine.

Preferably, the at least one deflector element is rotatable about a horizontal axis, wherein the machine preferably comprises a motor for rotating the at least one deflector element about the horizontal axis, and/or the at least one horizontal shutter is connected to the at least one deflector element for rotating the deflector element when the at least one horizontal shutter moves between the closed position and the open position. The method preferably comprises the step of automatically rotating the at least one deflector element about the horizontal axis, preferably using the motor and/or the at least one horizontal shutter, after and/or during the step of moving the at least one horizontal shutter to the open position.

The machine preferably comprises a sweeping device for automatically sweeping pineapple pieces from the at least one deflector element. The method preferably comprises the step of automatically sweeping pineapple pieces from the at least one deflector element using the sweeping device after the step of moving the at least one horizontal shutter to the open position.

The cutting station preferably comprises a segmenting knife for cutting the pineapple along a vertical axis into the pineapple pieces, while the pineapple is placed on the at least one horizontal shutter, wherein the machine comprises a knife drive for driving the segmenting knife along the vertical axis into the pineapple. The method preferably comprises the step of driving the segmenting knife along the vertical axis into the pineapple using the knife drive, wherein the step of moving the at least one horizontal shutter to the open position takes place after the step of driving the segmenting knife into the pineapple and preferably before a step of retracting the segmenting knife from the pineapple using the knife drive.

### Brief Description of Drawings

The following description and drawings of various embodiments of the present invention are presented for purposes of illustration but are not intended to be exhaustive or limited to the embodiments disclosed.
Figure 1 shows an embodiment of the cutting station and the loading device of a machine according to the invention.
Figure 2 shows a detail view of the loading device of figure 1.
Figure 3 shows the cutting station and the loading device of figure 1 with opened shutters.
Figure 4 shows an embodiment of the loading device having an alternative embodiment of the deflector element.
Figure 5 shows the cutting station of figure 1 with raised segmenting knife.
Figure 6 shows an embodiment of the cutting station having an alternative embodiment of the segmenting knife.
Figure 7 shows an embodiment of the loading device having an orientation element.
Figure 8 shows an embodiment of the first processing station of a machine according to the invention.
Figure 9 shows a first embodiment of the second processing station of a machine according to the invention.
Figure 10 shows a second embodiment of the second processing station of a machine according to the invention.
Figure 11 shows a third embodiment of the second processing station of a machine according to the invention.
Figure 12 shows an embodiment of the shutters of a machine according to the invention in the closed position.
Figure 13 shows the shutters of figure 12 in the open position.

### Fig.1

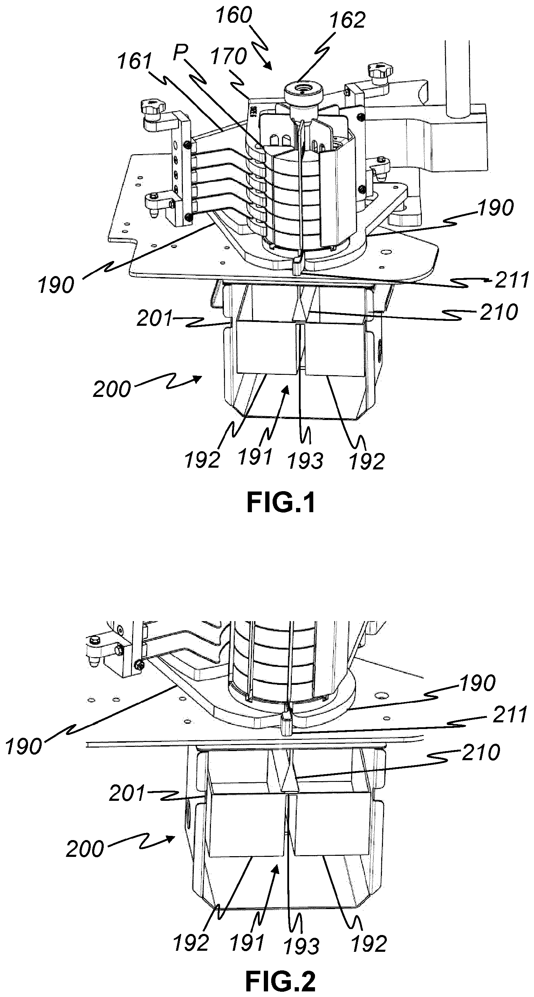

Figure 1 shows an embodiment of the cutting station 160 and the loading device 200 of a machine according to the invention.

The cutting station 160 is designed for cutting a pineapple P into a plurality of pineapple pieces. The loading device 200 is designed for loading the pineapple pieces into a recipient 191 having two compartments 192 separated a partition wall 193. In the embodiment shown, the recipient 191 is placed in a loading bay 201 of the loading device 200.

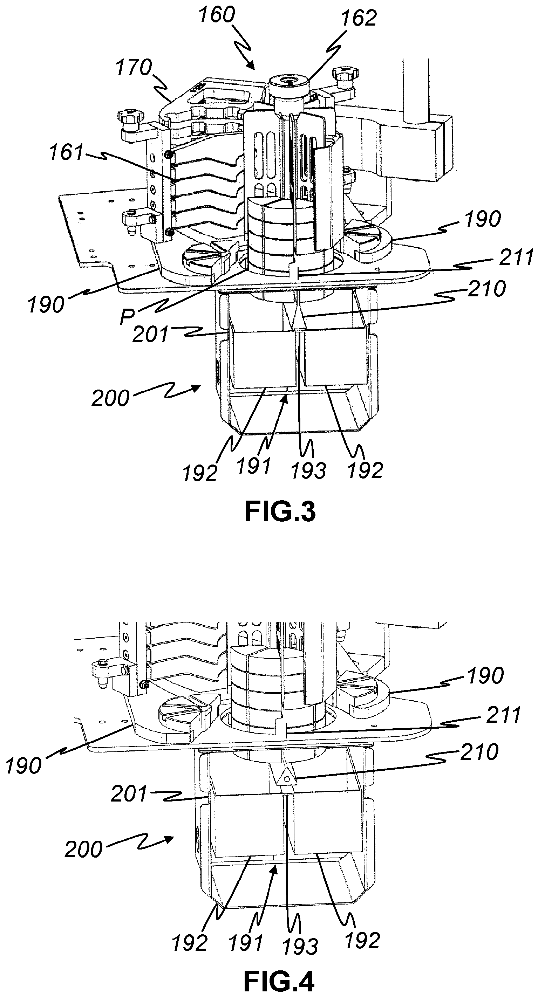

The machine comprises two horizontal shutters 190, being movable between a closed position (shown in figures 1 and 2) holding the pineapple pieces above the recipient 191 and an open position (shown in figure 3 and 4) letting the pineapple pieces fall into the recipient 191.

The cutting station 160 comprises five slicing knives 161 having parallel cutting directions and parallel cutting planes. The cutting directions and cutting planes of the slicing knives are oriented horizontally, for example. The slicing knives 161 are stationary with respect to the surrounding of the machine, and the machine comprises a second pusher 170 for pushing the pineapple P, for instance in a horizontal direction, through spaces between the stationary slicing knives 161.

The cutting station 160 comprises a segmenting knife 162 for cutting the pineapple P along a vertical axis into pineapple segments, while the pineapple P is placed on the horizontal shutters 190. In figures 1 to 4, the segmenting knife 162 is shown in a position inserted into the pineapple P.

The machine comprises a deflector element 210 for deflecting the falling pineapple pieces from an upper edge of the partition wall 193 of the recipient 191. For example, the deflector element 210 has the shape of a gable roof wherein a ridge of the gable roof is arranged in parallel above the partition wall 193. A section 211 of the deflector element 210 extends between the shutters 190 in their closed position. The section 211 may be detached or detachable from the remaining part of the deflector element 210.

### Fig.2

Figure 2 shows a detail view of the loading device 200 of figure 1. The deflector element 210 extends between the two shutters 190 in their closed position, for example.

### Fig.3

Figure 3 shows the cutting station 160 and the loading device 200 of figure 1 with opened shutters 190. To get from the closed position shown in figures 1 and 2 to the open position shown in figures 3 and 4, the horizontal shutters 190 are rotated in mutually opposing directions, for instance.

For example, the horizontal shutters 190 are closed against the recoil force of a spring element (not shown) by an actuator (not shown) on the second pusher 170 when the second pusher 170 pushes the pineapple P into the cutting station. When the second pusher 170 is retreated from the cutting station 160 to the position shown in figure 3, the actuator on the second pusher 170 releases the shutters 190 so that the recoil force of the spring element moves the shutters 190 to the open position shown in figure 3.

In the embodiment shown, the segmenting knife 162 is held in the position inserted into the pineapple P while the shutters 190 are opened so that segmenting knife 162 prevents the pineapple pieces from following the horizontal movement of the shutters 190. When the shutters 190 are open, the pineapple pieces slide down along the segmenting knife 162 into the recipient 191.

### Fig.4

Figure 4 shows an embodiment of the loading device 200 having an alternative embodiment of the deflector element 210. In this embodiment, the deflector element 210 is rotatable about a horizontal axis arranged in parallel above the partition wall 193 of the recipient 191. The deflector element 210 has a triangular prismatic shape arranged coaxially to the horizontal axis, for example.

### Fig.5

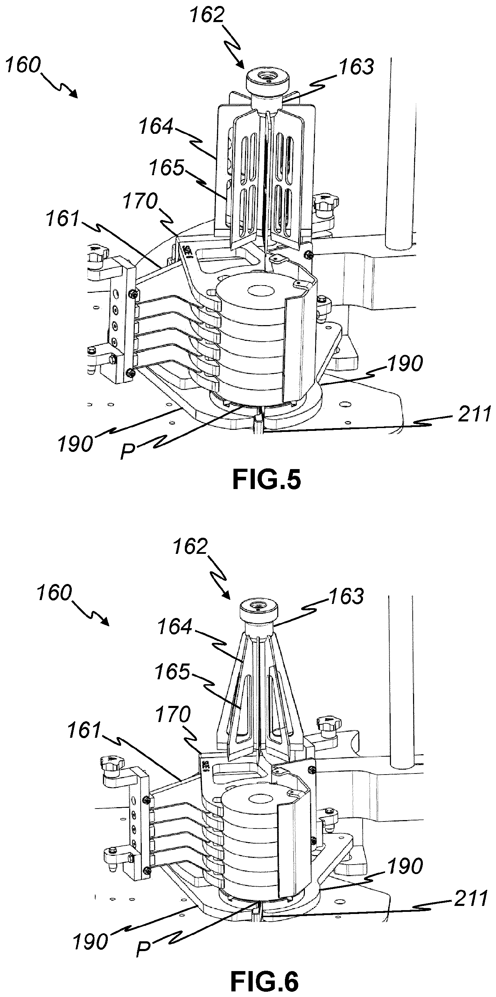

Figure 5 shows the cutting station 160 of figure 1 with raised segmenting knife 162 before the segmenting knife 162 is inserted along a vertical axis into the pineapple P placed on the horizontal shutters 190.

The segmenting knife 162 comprises a shaft 163 arranged on the vertical axis and, for example, six flat blades 164 arranged radially on the shaft 163. The flat blades 164 comprise holes 165 to prevent the pineapple pieces from sticking to the flat blades 164 when the horizontal shutters 190 are opened.

### Fig.6

Figure 6 shows an embodiment of the cutting station 160 having an alternative embodiment of the segmenting knife 162. As in figure 5, the segmenting knife 162 is shown in its raised position.

Instead of a rectangular shape as shown in figure 5, the flat blades 164 of the segmenting knife 162 shown in figure 6 have an upwardly tapering shape, for instance a triangular shape.

### Fig.7

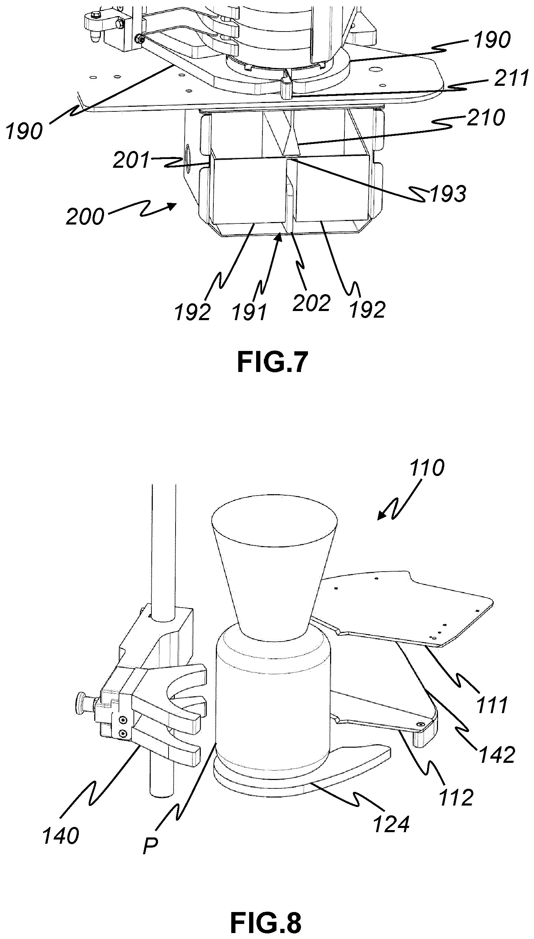

Figure 7 shows an embodiment of the loading device 200 having an orientation element 202 for setting an orientation of the recipient 191 during placement of the recipient 191 below the horizontal shutters 190. The orientation element 202 comprises, for example, a web arranged in the loading bay 201 and designed to cooperate with a groove of the recipient 191, in particular with a groove between the two compartments 192 of the recipient 191.

### Fig.8

Figure 8 shows an embodiment of the first processing station 110 of a machine according to the invention. The first processing station 110 has a top knife 111 for removing a top end of the pineapple P and a bottom knife 112 for removing a bottom end of the pineapple P.

For example, the top knife 111 and the bottom knife 112 are arranged to cut the ends of the pineapple P with horizontal cutting edges in a horizontal cutting direction. In the embodiment shown, the top knife 111 and the bottom knife 112 are stationary with respect to a surrounding of the machine, and the machine comprises a first pusher 140 for pushing the pineapple P through the first processing station 110, thereby removing the ends of the pineapple P with the stationary top knife 111 and bottom knife 112.

Before being pushed through the first processing station 110, the pineapple P is placed by a user of the machine on a support element 124, for example. The bottom knife 112 is connected to a first support surface 142 for supporting the pineapple P when it is pushed with the first pusher 140 from the first processing station 110 to further processing stations, for instance.

### Fig.9

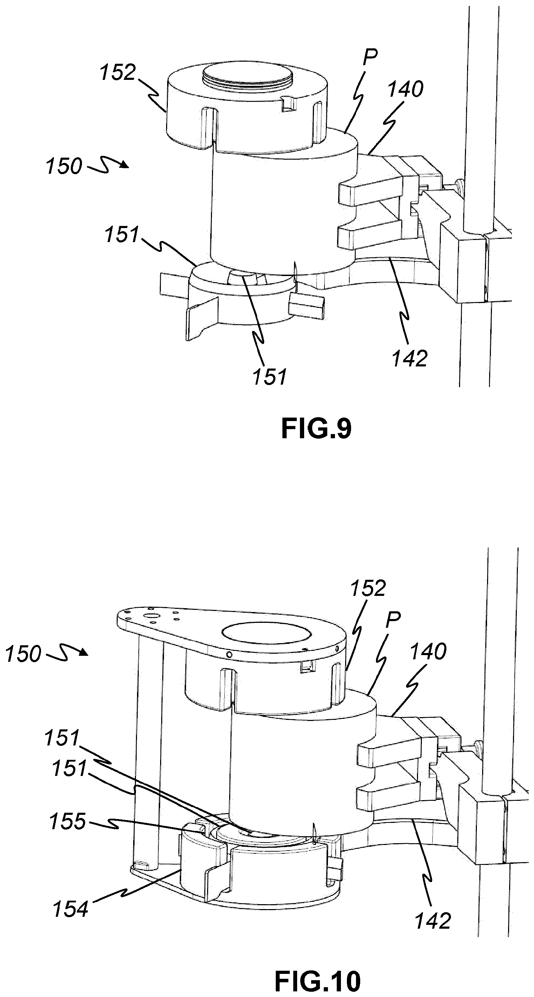

Figure 9 shows a first embodiment of the second processing station 150 of a machine according to the invention. Additionally, figure 9 shows a first pusher 140 for pushing the pineapple P on a first support surface 142, for example in a horizontal direction, into the second processing station 150.

The second processing station comprises two circular blades 151 arranged concentrically for simultaneously separating the core and the peel from the pulp of the pineapple P. In the embodiment shown in figure 9, the second processing station 150 comprises an axial pusher 152 for pushing the pineapple P along its longitudinal axis, for instance vertically downwards, through a space between the circular blades 151 while the circular blades 151 are stationary with respect to the surrounding of the machine.

### Fig.10

Figure 10 shows a second embodiment of the second processing station 150 of a machine according to the invention.

In addition to the features shown in figure 9, the second processing station 150 shown in figure 10 comprises a mobile support element 154 supporting the pineapple P while the pineapple P is driven through the space between the circular blades 151. For instance, the mobile support element 154 is attached to the axial pusher 152 at a fixed distance from the axial pusher 152 so that the pineapple P without its top end and bottom end can be placed between the axial pusher 152 and the mobile support element 154. The mobile support element 154 has recesses 155 for the circular blades 151. Consequently, the circular blades 151 can be concealed in the recesses 155 so that the circular blades 151 do not hinder the placement of the pineapple P on the mobile support element 154, for example by pushing the pineapple P in a horizontal direction onto the mobile support element 154.

### Fig.11

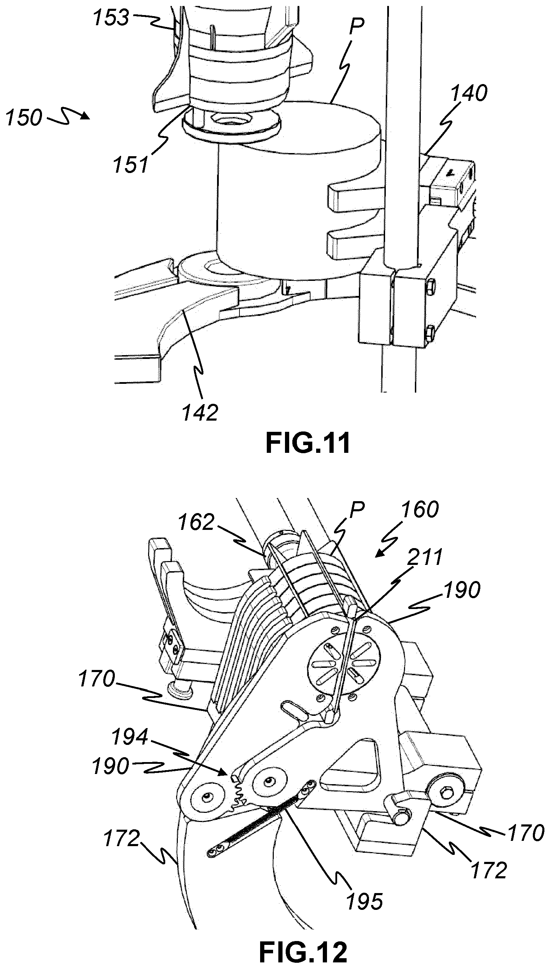

Figure 11 shows a third embodiment of the second processing station 150 of a machine according to the invention.

Instead of a axial pusher as shown in figures 9 and 10, the second processing station 150 shown in figure 11 comprises a blade drive 153 for driving the circular blades 151 through the pineapple P along its longitudinal axis, for example vertically downwards, while the pineapple P is stationary with respect to the surrounding of the machine. For instance, the pineapple P is supported by the first support surface 142 while the circular blades 151 are driven through the pineapple P.

### Fig.12

Figure 12 shows an embodiment of the horizontal shutters 190 of a machine according to the invention in the closed position. The horizontal shutters 190 have been moved to the closed position by the second pusher 170 pushing the pineapple P on the second support surface 172 into the cutting station 160. During the movement of the second pusher 170, an actuator 172, for example a hook, attached to the second pusher 170 engages with one of the horizontal shutters 190 and pushes the horizontal shutter 190 against the recoil force of a spring element 195, for example a coil spring, into the closed position. The two shutters horizontal 190 are connected by a gear train 194 to synchronise their movement.

A section 211 of the deflector element 210 is arranged between the two horizontal shutters 190 in their closed position.

While the horizontal shutters 190 are in the closed position, the pineapple P positioned on the horizontal shutters 190 can be segmented by the segmenting knife 162 of the cutting station 160 of the machine.

### Fig.13

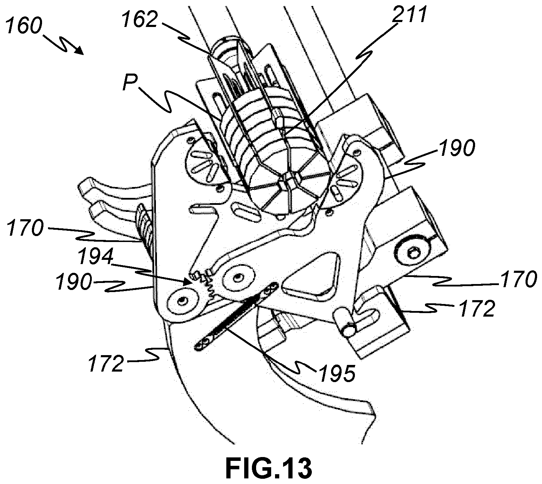

Figure 13 shows the horizontal shutters 190 of figure 12 in the open position. To get from the closed position shown in figure 12 to the open position shown in figure 13, the second pusher 170 is retreated from the cutting station 160. During this movement, the actuator 172 attached to the second pusher 170 disengages from the horizontal shutter 190 allowing the recoil force of the spring element 195 to move the horizontal shutter 190 to the open position. The actuator 172 may assist the movement of the shutter to the open position by pulling the horizontal shutter 190 in the corresponding direction before disengaging.

When the horizontal shutters 190 are in the open position, the pineapple P can fall from the cutting station 160 into a recipient (not shown) positioned below the cutting station 160.

**Reference Signs List**

| | | | |
|---|---|---|---|
| 110 | first processing station | 170 | second pusher |
| 111 | top knife | 171 | second support surface |
| 112 | bottom knife | 172 | actuator |
| 124 | support element | 190 | horizontal shutter |
| 140 | first pusher | 191 | recipient |
| 142 | first support surface | 192 | compartment |
| 150 | second processing station | 193 | partition wall |
| 151 | circular blade | 194 | gear train |
| 152 | axial pusher | 195 | spring element |
| 153 | blade drive | 200 | loading device |
| 154 | mobile support element | 201 | loading bay |
| 155 | recess | 202 | orientation element |
| 160 | cutting station | 210 | deflector element |
| 161 | slicing knife | 211 | section |
| 162 | segmenting knife | | |
| 163 | shaft | la | longitudinal axis |
| 164 | Flat blade | P | pineapple |
| 165 | Hole | | |

## Claims

1. A machine for automatically preparing a whole pineapple (P) for consumption at a pineapple point of sale, the machine comprising
a. a number of processing stations (110, 150) for removing a top end of the pineapple (P), a bottom end of the pineapple (P), a peel of the pineapple (P) and/or a core of the pineapple (P);
b. a cutting station (160) for cutting the pineapple (P) into a plurality of pineapple pieces;
c. a loading device (200) for loading the pineapple pieces into at least one recipient (191) having at least two compartments (192) separated by at least one partition wall (193); and
d. at least one horizontal shutter (190), the at least one horizontal shutter (190) being movable between a closed position holding the pineapple pieces above the recipient (191) and an open position letting the pineapple pieces fall into the recipient (191);
**characterized in that**
e. the machine comprises at least one deflector element (210) for deflecting the falling pineapple pieces from an upper edge of the at least one partition wall (193) of the at least one recipient (191).

2. The machine according to claim 1,
wherein the at least one horizontal shutter (190) comprises at least two horizontal shutters (190), the at least two horizontal shutters (190) cooperating in the closed position for holding the pineapple pieces above the recipient (191).

3. The machine according to claim 2,
wherein the at least two horizontal shutters (190) are movable in opposing directions from the closed position to the open position.

4. The machine according to claim 2 or 3,
wherein the at least two horizontal shutters (190) are movable in directions perpendicular to the at least one partition wall (193) of the at least one recipient (191) from the closed position to the open position.

5. The machine according to one of claims 2 to 4,
wherein a section (211) of the at least one deflector element (210) extends between the at least two horizontal shutters (190) in the closed position.

6. The machine according to one of claims 1 to 5,
wherein the at least one deflector element (210) is rotatable about a horizontal axis.

7. The machine according to claim 6, wherein
a. the machine comprises a motor for rotating the at least one deflector element (210) about the horizontal axis; and/or
b. the at least one horizontal shutter (190) is connected to the at least one deflector element (210) for rotating the deflector element (210) when the at least one horizontal shutter (190) moves between the closed position and the open position.

8. The machine according to one of claims 1 to 7,
wherein the machine comprises a sweeping device (212) for automatically sweeping pineapple pieces from the at least one deflector element (210).

9. The machine according to one of claims 1 to 8,
a. wherein the cutting station (160) comprises a segmenting knife (162) for cutting the pineapple (P) along a vertical axis into pineapple segments, while the pineapple (P) is placed on the at least one horizontal shutter (190);
b. wherein the machine comprises a knife drive for driving the segmenting knife (162) along the vertical axis into the pineapple (P).

10. The machine according to claim 9,
a. wherein the segmenting knife (162) comprises a shaft (163) arranged on the vertical axis and plurality of flat blades (164) arranged radially on the shaft (163);
b. wherein the flat blades (164) comprise a number of holes (165) and/or have an upwardly tapering shape.

11. The machine according to one of claims 1 to 10,
wherein the machine comprises an orientation element (202) for setting an orientation of the at least one recipient (191) during placement of the at least one recipient (191) below the at least one horizontal shutter (190).

12. A method for automatically preparing a whole pineapple (P) for consumption at a pineapple point of sale using a machine according to one of claims 1 to 11, the method comprising the following steps:
a. removing a top end of the pineapple (P), a bottom end of the pineapple (P), a peel of the pineapple (P) and/or a core of the pineapple (P) using the processing stations (110, 150) of the machine;
b. cutting the pineapple (P) into a plurality of pineapple pieces using the cutting station (160) of the machine;
c. loading the pieces into at least one recipient (191) having at least two compartments (192) separated by at least one partition wall (193) using the loading device (200) of the machine;
d. wherein the step of loading the pineapple pieces into the at least one recipient (191) comprises moving the at least one horizontal shutter (190) of the machine from a closed position holding the pineapple pieces above the recipient (191) to an open position letting the pineapple pieces fall into the recipient (191) and deflecting the falling pineapple pieces from an upper edge of the at least one partition wall (193) of the at least one recipient (191) using the at least one deflector element (210) of the machine.

13. The method according to claim 12,
a. wherein the at least one deflector element (210) is rotatable about a horizontal axis;
b. wherein the machine comprises a motor for rotating the at least one deflector element (210) about the horizontal axis, and/or the at least one horizontal shutter (190) is connected to the at least one deflector element (210) for rotating the deflector element (210) when the at least one horizontal shutter (190) moves between the closed position and the open position;
c. wherein the method comprises the step of automatically rotating the at least one deflector element (210) about the horizontal axis using the motor and/or the at least one horizontal shutter (190) after and/or during the step of moving the at least one horizontal shutter (190) to the open position.

14. The method according to claim 12 or 13,
a. wherein the machine comprises a sweeping device for automatically sweeping pineapple pieces from the at least one deflector element (210);
b. wherein the method comprises the step of automatically sweeping pineapple pieces from the at least one deflector element (210) using the sweeping device (212) after the step of moving the at least one horizontal shutter (190) to the open position.

15. The method according to one of claims 12 to 14,
a. wherein the cutting station (160) comprises a segmenting knife (162) for cutting the pineapple (P) along a vertical axis into the pineapple pieces, while the pineapple (P) is placed on the at least one horizontal shutter (190);
b. wherein the machine comprises a knife drive for driving the segmenting knife (162) along the vertical axis into the pineapple (P);
c. wherein the method comprises the step of driving the segmenting knife (162) along the vertical axis into the pineapple (P) using the knife drive;
d. wherein the step of moving the at least one horizontal shutter (190) to the open position takes place after the step of driving the segmenting knife (162) into the pineapple (P) and preferably before a step of retracting the segmenting knife (162) from the pineapple (P) using the knife drive.

## Patentansprüche

1. Maschine zur automatischen Vorbereitung einer ganzen Ananas (P) für den Verzehr an einem Ananas-Verkaufsort, die Maschine umfassend
a. eine Anzahl von Verarbeitungsstationen (110, 150) zum Entfernen eines oberen Endes der Ananas (P), eines unteren Endes der Ananas (P), einer Schale der Ananas (P) und/oder eines Strunks der Ananas (P);
b. eine Schneidestation (160) zum Schneiden der Ananas (P) in mehrere Ananasstücke;
c. eine Ladevorrichtung (200) zum Laden der Ananasstücke in mindestens einen Behälter (191) mit mindestens zwei Fächern (192), die durch mindestens eine Trennwand (193) voneinander getrennt sind; und
d. mindestens einen horizontalen Verschluss (190), wobei der mindestens eine horizontale Verschluss (190) zwischen einer geschlossenen Position, in der die Ananasstücke über dem Behälter (191) gehalten werden, und einer offenen Position, in der die Ananasstücke in den Behälter (191) fallen können, bewegbar ist;
**dadurch gekennzeichnet, dass**
e. die Maschine mindestens ein Ablenkelement (210) umfasst, um die fallenden Ananasstücke von einer Oberkante der mindestens einen Trennwand (193) des mindestens einen Behälters (191) abzulenken.

2. Maschine nach Anspruch 1,
wobei der mindestens eine horizontale Verschluss (190) mindestens zwei horizontale Verschlüsse (190) umfasst, wobei die mindestens zwei horizontalen Verschlüsse (190) in der geschlossenen Position zusammenwirken, um die Ananasstücke über dem Behälter (191) zu halten.

3. Maschine nach Anspruch 2,
wobei die mindestens zwei horizontalen Verschlüsse (190) in entgegengesetzte Richtungen von der geschlossenen Position in die offene Position bewegbar sind.

4. Maschine nach Anspruch 2 oder 3,
wobei die mindestens zwei horizontalen Verschlüsse (190) in Richtungen orthogonal zu der mindestens einen Trennwand (193) des mindestens einen Behälters (191) von der geschlossenen Position in die geöffnete Position bewegbar sind.

5. Maschine gemäß einem der Ansprüche 2 bis 4,
wobei sich ein Abschnitt (211) des mindestens einen Ablenkelements (210) zwischen die mindestens zwei horizontalen Verschlüsse (190) in der geschlossenen Position erstreckt.

6. Maschine nach einem der Ansprüche 1 bis 5,
wobei das mindestens eine Ablenkelement (210) um eine horizontale Achse drehbar ist.

7. Maschine gemäß Anspruch 6, wobei
a. die Maschine einen Motor zum Drehen des mindestens einen Ablenkelements (210) um die horizontale Achse umfasst; und/oder
b. der mindestens eine horizontale Verschluss (190) mit dem mindestens einen Ablenkelement (210) verbunden ist, um das Ablenkelement (210) zu drehen, wenn sich der mindestens eine horizontale Verschluss (190) zwischen der geschlossenen Position und der offenen Position bewegt.

8. Maschine gemäß einem der Ansprüche 1 bis 7,
wobei die Maschine eine Kehrvorrichtung (212) zum automatischen Kehren von Ananasstücken von dem mindestens einen Ablenkelement (210) umfasst.

9. Maschine gemäß einem der Ansprüche 1 bis 8,
a. wobei die Schneidestation (160) ein Segmentiermesser (162) zum Schneiden der Ananas (P) entlang einer vertikalen Achse in Ananassegmente umfasst, während die Ananas (P) auf dem mindestens einen horizontalen Verschluss (190) platziert ist;
b. wobei die Maschine einen Messerantrieb zum Antreiben des Segmentiermessers (162) entlang der vertikalen Achse in die Ananas (P) umfasst.

10. Maschine gemäß Anspruch 9,
a. wobei das Segmentiermesser (162) eine auf der vertikalen Achse angeordneten Stange (163) und mehrere flache Klingen (164) umfasst, die radial auf der Stange (163) angeordnet sind;
b. wobei die flachen Klingen (164) eine Anzahl von Löchern (165) aufweisen und/oder eine sich nach oben verjüngende Form haben.

11. Maschine gemäß einem der Ansprüche 1 bis 10,
wobei die Maschine ein Ausrichtungselement (202) zum Einstellen einer Ausrichtung des mindestens einen Behälters (191) während der Platzierung des mindestens einen Behälters (191) unterhalb des mindestens einen horizontalen Verschlusses (190) umfasst.

12. Verfahren zur automatischen Vorbereitung einer ganzen Ananas (P) für den Verzehr an einem Ananas-Verkaufsort unter Verwendung einer Maschine gemäß einem der Ansprüche 1 bis 11, wobei das Verfahren die folgenden Schritte umfasst:
a. Entfernen eines oberen Endes der Ananas (P), eines unteren Endes der Ananas (P), einer Schale der Ananas (P) und/oder eines Strunks der Ananas (P) unter Verwendung der Verarbeitungsstationen (110, 150) der Maschine;
b. Schneiden der Ananas (P) in mehrere Ananasstücke unter Verwendung der Schneidestation (160) der Maschine;
c. Einfüllen der Stücke in mindestens einen Behälter (191) mit mindestens zwei Fächern (192), die durch mindestens eine Trennwand (193) voneinander getrennt sind, unter Verwendung der Füllvorrichtung (200) der Maschine;
d. wobei das Einfüllen der Ananasstücke in den mindestens einen Behälter (191) ein Bewegen des mindestens einen horizontalen Verschlusses (190) der Maschine aus einer geschlossenen Position, in der die Ananasstücke über dem Behälter (191) gehalten werden, in eine offene Position, in der die Ananasstücke in den Behälter (191) fallen können, und ein Ablenken der fallenden Ananasstücke von einer Oberkante der mindestens einen Trennwand (193) des mindestens einen Behälters (191) mithilfe des mindestens einen Ablenkelements (210) der Maschine umfasst.

13. Verfahren nach Anspruch 12,
a. wobei das mindestens eine Ablenkelement (210) um eine horizontale Achse drehbar ist;
b. wobei die Maschine einen Motor zum Drehen des mindestens einen Ablenkelements (210) um die horizontale Achse umfasst, und/oder wobei der mindestens eine horizontale Verschluss (190) mit dem mindestens einen Ablenkelement (210) verbunden ist, um das Ablenkelement (210) zu drehen, wenn sich der mindestens eine horizontale Verschluss (190) zwischen der geschlossenen Position und der offenen Position bewegt;
c. wobei das Verfahren ein automatisches Drehen des mindestens einen Ablenkelements (210) um die horizontale Achse unter Verwendung des Motors und/oder des mindestens einen horizontalen Verschlusses (190) nach dem Bewegen und/oder während des Bewegens des mindestens einen horizontalen Verschlusses (190) in die geöffnete Position umfasst.

14. Verfahren nach Anspruch 12 oder 13,
a. wobei die Maschine eine Kehrvorrichtung zum automatischen Kehren von Ananasstücken von dem mindestens einen Ablenkelement (210) umfasst;
b. wobei das Verfahren ein automatisches Kehren von Ananasstücken von dem mindestens einen Ablenkelement (210) unter Verwendung der Kehrvorrichtung (212) nach dem Bewegen des mindestens einen horizontalen Verschlusses (190) in die geöffnete Position umfasst.

15. Verfahren nach einem der Ansprüche 12 bis 14,
a. wobei die Schneidestation (160) ein Segmentiermesser (162) zum Schneiden der Ananas (P) entlang einer vertikalen Achse in die Ananasstücke umfasst, während die Ananas (P) auf dem mindestens einen horizontalen Verschluss (190) platziert ist;
b. wobei die Maschine einen Messerantrieb umfasst, um das Segmentiermesser (162) entlang der vertikalen Achse in die Ananas (P) anzutreiben;
c. wobei das Verfahren ein Antreiben des Segmentiermessers (162) entlang der vertikalen Achse in die Ananas (P) unter Verwendung des Messerantriebs umfasst;
d. wobei das Bewegen des mindestens einen horizontalen Verschlusses (190) in die geöffnete Position nach dem Antreiben des Segmentiermessers (162) in die Ananas (P) und vorzugsweise vor einem Zurückziehen des Segmentiermessers (162) aus der Ananas (P) unter Verwendung des Messerantriebs stattfindet.

## Revendications

1. Machine de préparation automatique d'un ananas entier (P) pour la consommation à un point de vente d'ananas, la machine comprenant
a. un certain nombre de stations de traitement (110, 150) pour retirer l'extrémité supérieure de l'ananas (P), l'extrémité inférieure de l'ananas (P), la peau de l'ananas (P) et/ou le cœur de l'ananas (P) ;
b. une station de découpe (160) pour découper l'ananas (P) en une pluralité de morceaux d'ananas ;
c. un dispositif de chargement (200) pour charger les morceaux d'ananas dans au moins un récipient (191) comportant au moins deux compartiments (192) séparés par au moins une paroi de séparation (193) ; et
d. au moins un volet horizontal (190), ledit au moins un volet horizontal (190) étant mobile entre une position fermée maintenant les morceaux d'ananas au-dessus du récipient (191) et une position ouverte laissant les morceaux d'ananas tomber dans le récipient (191) ;
**caractérisé en ce que**
e. la machine comprend au moins un élément déflecteur (210) pour dévier les morceaux d'ananas qui tombent depuis un bord supérieur de ladite au moins une paroi de séparation (193) dudit au moins un récipient (191).

2. La machine selon la revendication 1,
ledit au moins un volet horizontal (190) comprenant au moins deux volets horizontaux (190), les au moins deux volets horizontaux (190) coopérant dans la position fermée pour maintenir les morceaux d'ananas au-dessus du récipient (191).

3. La machine selon la revendication 2,
lesdits au moins deux volets horizontaux (190) étant mobiles dans des directions opposées depuis la position fermée vers la position ouverte.

4. La machine selon la revendication 2 ou 3,
lesdits au moins deux volets horizontaux (190) étant mobiles dans des directions perpendiculaires à ladite au moins une paroi de séparation (193) dudit au moins un récipient (191) depuis la position fermée vers la position ouverte.

5. La machine selon l'une des revendications 2 à 4,
une section (211) dudit au moins un élément déflecteur (210) s'étendant entre les au moins deux volets horizontaux (190) en position fermée.

6. La machine selon l'une des revendications 1 à 5,
ledit au moins un élément déflecteur (210) pouvant tourner autour d'un axe horizontal.

7. La machine selon la revendication 6,
a. la machine comprenant un moteur pour faire tourner ledit au moins un élément déflecteur (210) autour de l'axe horizontal ; et/ou
b. ledit au moins un volet horizontal (190) étant relié audit au moins un élément déflecteur (210) pour faire tourner l'élément déflecteur (210) lorsque ledit au moins un volet horizontal (190) se déplace entre la position fermée et la position ouverte.

8. La machine selon l'une des revendications 1 à 7,
la machine comprenant un dispositif de balayage (212) pour balayer automatiquement les morceaux d'ananas dudit au moins un élément déflecteur (210).

9. La machine selon l'une des revendications 1 à 8,
a. la station de coupe (160) comprenant un couteau de segmentation (162) pour couper l'ananas (P) le long d'un axe vertical en segments d'ananas, tandis que l'ananas (P) est placé sur le au moins un volet horizontal (190) ;
b. la machine comprenant un entraînement de couteau pour entraîner le couteau de segmentation (162) le long de l'axe vertical dans l'ananas (P).

10. La machine selon la revendication 9,
a. le couteau de segmentation (162) comprenant une barre (163) disposé sur l'axe vertical et une pluralité de lames plates (164) disposées radialement sur la barre (163) ;
b. les lames plates (164) comprenant un certain nombre de trous (165) et/ou ayant une forme effilée vers le haut.

11. La machine selon l'une des revendications 1 à 10,
la machine comprenant un élément d'orientation (202) pour définir une orientation dudit au moins un récipient (191) pendant le placement dudit au moins un récipient (191) sous ledit au moins un volet horizontal (190).

12. Procédé de préparation automatique d'un ananas entier (P) pour la consommation à un point de vente d'ananas à l'aide d'une machine selon l'une des revendications 1 à 11, le procédé comprenant les étapes suivantes :
a. retirer une extrémité supérieure de l'ananas (P), une extrémité inférieure de l'ananas (P), une peau de l'ananas (P) et/ou un cœur de l'ananas (P) à l'aide des stations de traitement (110, 150) de la machine ;
b. couper l'ananas (P) en plusieurs morceaux à l'aide de la station de coupe (160) de la machine ;
c. charger les morceaux dans au moins un récipient (191) comportant au moins deux compartiments (192) séparés par au moins une paroi de séparation (193) à l'aide du dispositif de chargement (200) de la machine ;
d. l'étape de charger les morceaux d'ananas dans ledit au moins un récipient (191) comprenant le déplacement dudit au moins un volet horizontal (190) de la machine d'une position fermée maintenant les morceaux d'ananas au-dessus du récipient (191) à une position ouverte laissant les morceaux d'ananas tomber dans le récipient (191) et dévier les morceaux d'ananas tombants depuis un bord supérieur de ladite au moins une paroi de séparation (193) dudit au moins un récipient (191) à l'aide dudit au moins un élément déflecteur (210) de la machine.

13. Procédé selon la revendication 12,
a. ledit au moins un élément déflecteur (210) pouvant tourner autour d'un axe horizontal ;
b. la machine comprenant un moteur pour faire tourner ledit au moins un élément déflecteur (210) autour de l'axe horizontal, et/ou ledit au moins un volet horizontal (190) étant relié audit au moins un élément déflecteur (210) pour faire tourner l'élément déflecteur (210) lorsque ledit au moins un volet horizontal (190) se déplace entre la position fermée et la position ouverte ;
c. le procédé comprenant l'étape de faire tourner automatiquement ledit au moins un élément déflecteur (210) autour de l'axe horizontal à l'aide du moteur et/ou dudit au moins un volet horizontal (190) après et/ou pendant l'étape de déplacer ledit au moins un volet horizontal (190) vers la position ouverte.

14. Procédé selon la revendication 12 ou 13,
a. la machine comprenant un dispositif de balayage pour balayer automatiquement des morceaux d'ananas dudit au moins un élément déflecteur (210) ;
b. le procédé comprenant l'étape de balayer automatiquement des morceaux d'ananas dudit au moins un élément déflecteur (210) à l'aide du dispositif de balayage après l'étape de déplacer ledit au moins un volet horizontal (190) vers la position ouverte.

15. Procédé selon l'une des revendications 12 à 14,
a. la station de coupe (160) comprenant un couteau de segmentation (162) pour couper l'ananas (P) le long d'un axe vertical en morceaux d'ananas, tandis que l'ananas (P) est placé sur ledit au moins un volet horizontal (190) ;
b. la machine comprenant un entraînement de couteau pour entraîner le couteau de segmentation (162) le long de l'axe vertical dans l'ananas (P) ;
c. le procédé comprenant l'étape d'entraîner le couteau de segmentation (162) le long de l'axe vertical dans l'ananas (P) à l'aide de l'entraînement de couteau ;
d. l'étape de déplacer ledit au moins un volet horizontal (190) vers la position ouverte a lieu après l'étape d'entraîner le couteau de segmentation (162) dans l'ananas (P) et de préférence avant une étape de rétracter le couteau de segmentation (162) de l'ananas (P) à l'aide du dispositif d'entraînement du couteau.
